# EUROPÄISCHE PATENTSCHRIFT

(11) **EP 1 884 739 B1**
(45) Veröffentlichungstag und Bekanntmachung des Hinweises auf die Patenterteilung: **11.03.2015**
(21) Anmeldenummer: 07113029.8
(22) Anmeldetag: 24.07.2007
(51) Int. Cl.: G01B 11/04, G01B 11/06, G01G 9/00, G01G 11/00

(54) **Verfahren und vorrichtung zur bestimmung der masse von stückgut oder pulver auf einer fördereinrichtung**
Method and device for determining the mass of piece goods or powder in a conveyor facility
Procédé et dispositif destinés à la détermination de la masse de marchandises au détail ou de poudre sur un dispositif de convoyage

(30) Priorität: 31.07.2006 DE 102006035266
(43) Veröffentlichungstag der Anmeldung: 06.02.2008
(73) Patentinhaber: Dr. AUGUST OETKER NAHRUNGSMITTEL KG, 33617 Bielefeld (DE)
(72) Erfinder: Rohe, Thomas, 49632, Essen i.O. (DE); Große Kohorst, Werner, 49413, Dinklage (DE); Spiegel, Udo, Dr., 33619, Bielefeld (DE); Schäfer, Thomas, 33659, Bielefeld (DE); Pisch, Torsten, 33719, Bielefeld (DE)
(74) Vertreter: Taruttis, Stefan Georg

(56) Entgegenhaltungen:
- DD-A1- 268 998
- DE-A1- 4 204 843
- DE-A1- 10 136 980
- JP-A- 56 157 820
- JP-A- 2002 005 637
- US-A1- 2005 241 862

## Beschreibung

Die Erfindung betrifft ein Verfahren zur Bestimmung der Masse von einem auf einer Fördereinrichtung verteilten schütt- oder rieselfähigen Stückgut, das die Schritte umfaßt: Verteilen einzelner Stücke des Stückguts auf der Fördereinrichtung derart, daß sich ein überwiegender Teil derselben nicht gegenseitig überlappt; Fördern des Stückguts auf der Fördereinrichtung entlang einer Förderrichtung; Leiten der auf der Fördereinrichtung angeordneten Stücke durch einen Erfassungsbereich von mindestens zwei Kameras; Erzeugen von fortlaufenden Bildern der Stücke in dem Erfassungsbereich mit Hilfe der Kameras; Erzeugen von geometrischen Daten der Stücke auf der Grundlage der Bilder in Abhängigkeit von der Position der Stücke auf der Fördereinrichtung; und Berechnen der Masse der auf der Fördereinrichtung angeordneten Stücke aufgrund der geometrischen Daten derselben in Abhängigkeit von der Position der Stücke auf der Fördereinrichtung.

Die DE 698 06 579 T2 beschreibt eine Vorrichtung, bei der mittels einer Digitalkamera Bilder von Lebensmitteln auf einem Förderband aufgenommen werden und die Bilder in einem Rechner verwendet werden, um die Kühlung der Lebensmittel anhand des die Lebensmittel umströmenden Kühlfluids zu errechnen.

Die JP 2002 005637 offenbart ausweislich der englischsprachigen Zusammenfassung die Bestimmung der Masse reduzierter Eisenpellets durch Aufzeichnung von Abbildungen der Eisenpellets im NIR mittels einer Kamera, die auf das Förderband gerichtet ist, auf dem die Eisenpellets transportiert werden. Zur Unterscheidung zwischen Eisenpellets und Förderband wird das aufgenommene Bild nach einem vorgegebenen Schwellenwert in einen Teil hoher Dichte, der den Pellets zugeordnet wird, und einen Teil niedriger Dichte, der dem Förderband zugeordnet wird, aufgeteilt. Für jedes Pellet wird das Gewicht durch Multiplikation eines vorbestimmten Flächengewichts mit der für jedes Pellet bestimmten Fläche multipliziert, wobei die Fläche der Pellets mit einem Korrekturfaktor beeinflusst wird. Durch Integration der Pellets wird deren Gesamtgewicht errechnet.

Die DE 4204843 A1 beschreibt die Bestimmung von Volumen, Form und Gewicht von Fischen, die auf einem Förderband durch den Erfassungsbereich einer Kamera geführt werden, wobei das von der Kamera aufgenommene Bild neben einer Aufsicht durch Umlenkung eines Teils des Gesichtsfelds auch das maximale Höhenprofil etwa senkrecht zur Aufsicht enthält. Aus den Abbildern wird durch abschnittsweise Bestimmung von Breite und maximaler Dicke das Gewicht des Fischs durch Multiplikation mit der Geschwindigkeit des Förderbands über die Zeit zwischen dem Aufnehmen einzelner Breiten- und Dickenmaße, und Multiplikation mit dem spezifischen Gewicht ermittelt.

Die DE 10136980 A1 beschreibt Verfahren und Vorrichtung zur Bestimmung der Masse eines Teigbands. Das Teigband wird durchleuchtet und die Absorption bzw. Transmission wird abschnittsweise bestimmt und mit einem spezifischen Gewicht verrechnet. Mittels Integration über die Fläche wird die Gesamtmasse des Abschnitts ermittelt.

Die DD 268998 A1 beschreibt eine radiometrische Förderbandwaage zur Mengenbestimmung von Schüttgütern, beispielsweise von Rohbraunkohle. Durch wechselseitige Anordnung von radioaktiven Strahlern und Detektoren, jeweils gegenüberliegend um das Förderband angeordnet, und durch Kollimation der radioaktiven Strahlung an Quellen und Detektor wird eine Verbesserung der Strahlengeometrie erreicht, da sich die Absorption der radioaktiven Strahlung durch das Schüttgut unabhängig vom Profil des Schüttguts und von der Lage des Förderbands zwischen Quelle und Detektor messen lässt.

Die US 2005/0241862 A1 beschreibt die Bestimmung der Masse von Schüttgut auf einem Förderband, bei dem die Beladung des Förderbands mit dessen Geschwindigkeit multipliziert wird. Zur Berechnung des Gewichts von Schüttgut werden Lichtstrahlen auf die Oberfläche des Schüttguts gerichtet und deren Projektion von einer CCD-Kamera kontinuierlich aufgenommen. Die Lichtstrahlen sind fächerförmig und in einem Winkel gegen das Schüttgut gerichtet, während die Kamera im gleichen Winkel gegenüberliegend auf das Schüttgut gerichtet ist. Die Lichtstrahlen erzeugen auf dem Schüttgut einen Querschnitt des Materials, sodass die CCD-Kamera ein kontinuierliches Videosignal für den Querschnitt des Schüttguts liefert.

Die JP 56157820 beschreibt ausweislich der englischsprachigen Zusammenfassung die Bestimmung der Masse von Schüttgut auf einem Förderband mittels einer Wiegezelle, die unterhalb des Förderbands angeordnet ist und die Belastung auf dem Förderband aufnimmt.

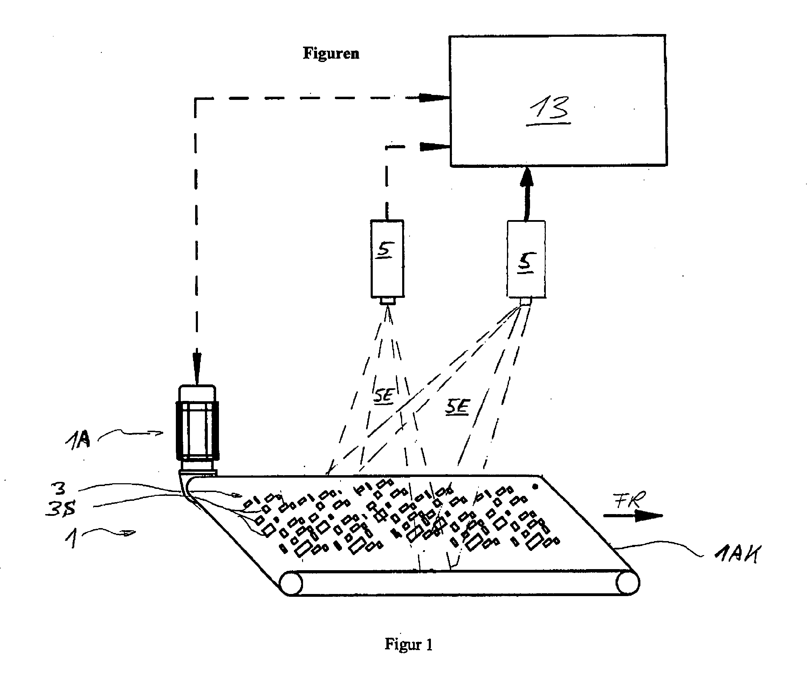

Unter Bezug auf Fig. 1 wird folgend eine nicht erfindungsgemäße Vorrichtung zur Durchführung eines bekannten Verfahrens zur Bestimmung der Masse von einem auf einer Fördereinrichtung verteilten schütt- oder rieselfähigen Gut beschrieben.

Die Vorrichtung umfaßt eine Fördereinrichtung 1 in Form eines Förderbandes, auf dem das Stückgut 3 verteilt ist. Die einzelnen Stücke 3S des Stückgutes 3 sind dabei derart auf dem Förderband 1 verteilt, daß sich ein überwiegender Teil der Stücke 3S des Stückguts 3 nicht gegenseitig überlappt. Das Förderband 1 fördert das Stückgut entlang einer Förderrichtung FR mit einer konstanten Geschwindigkeit.

Das Förderband 1 ist von einem Förderantrieb 1A angetrieben, der von einer Datenverarbeitungsanlage 13 gesteuert ist.

Oberhalb des Förderbandes 1 sind zwei Kameras 5 angeordnet, die jeweils einen Erfassungsbereich 5E aufweisen, wobei sich die Erfassungsbereiche 5E der Kameras 5 auf dem Förderband 1 überlappen.

Jedes Stück 3S des Stückguts 3 wird somit aus zwei Richtungen fotografiert, und die Bilder der Stücke 3S werden in der Datenverarbeitungsanlage 13 zusammengeführt. Die Datenverarbeitungsanlage 13 interpoliert aus den Bilddaten der Kameras 5 ein Volumen der Stücke 3S des Stückguts 3, indem beispielsweise die Stücke 3S des Stückguts 3 durch Ellipsoide approximiert werden.

Die auf diese Weise generierten Volumeninformationen über die Stücke 3S werden mit der Dichte des Stückguts 3 multipliziert, wodurch sich die Masse der einzelnen Stücke 3S ergibt.

Da der Datenverarbeitungsanlage 13 durch an dem Förderband 1 angeordnete Impulsgeber der tatsächliche Vorschub des Förderbandes 1 mitgeteilt wird, liegen in der Datenverarbeitungsanlage 13 Daten vor, die angeben, welche Masse des Guts in welchem Abstand von einer Abwurfkante 1AK des Förderbands I angeordnet ist.

Ein Nachteil des Verfahrens gemäß der Fig. 1 ist, daß dieses aufgrund der Volumeninterpolation sehr rechenintensiv und aufwendig ist. Ein Nachteil der Vorrichtung gemäß der Fig. 1 ist, daß diese aufgrund der mindestens zwei Kameras und aufgrund der hohen benötigten Rechenleistung der Datenverarbeitungsanlage 13 aufwendig und teuer ist. Ein Nachteil des Verfahrens und der Vorrichtung ist, daß diese nur für Stückgut geeignet sind.

Aufgabe der vorliegenden Erfindung ist es daher, die Vorrichtung gemäß der Fig. 1 zu vereinfachen, und die Verarbeitungszeit in der Datenverarbeitungsanlage zu verringern. Eine weitere Aufgabe der vorliegenden Erfindung ist es, die Beschränkung auf Stückgut zu überwinden, und eine Erweiterung auf Pulver zu schaffen.

Diese Aufgabe wird erfindungsgemäß verfahrensseitig für Stückgut gelöst durch ein Verfahren gemäß Anspruch 1.

Zur Bestimmung der durchschnittlichen Flächenmasse des Stückguts wird bevorzugt eine vorbestimmte Masse des Stückguts auf der Fördereinrichtung verteilt und durch den Erfassungsbereich der Kamera geleitet, und die Projektionsflächenmaße von Stücken dieses Stückguts werden zu einem Gesamtprojektionsflächenmaß addiert, so daß sich die durchschnittliche Flächenmasse als Quotient der vorbestimmten Masse und des Gesamtprojektionsflächenmaßes des Stückguts ergibt.

Bevorzugt wird als ein Teil der geometrischen Daten im Schritt e) von Anspruch 1 ein Projektionsflächenschwerpunkt von der Projektionsfläche eines jeden Stückes des Stückguts bestimmt.

Diese Aufgabe wird erfindungsgemäß verfahrensseitig für ein Pulver gelöst durch ein Verfahren gemäß Anspruch 8.

Zur Bestimmung der Schichthöhe-Intensitäts-Relation werden bevorzugt vorbestimmte Höhen des Pulvers auf der Fördereinrichtung verteilt und durch den Erfassungsbereich der Kamera geleitet, um jeder Schichthöhe eine Intensität der Lichtquelle zuzuordnen.

Bevorzugt wird das Stückgut oder das Pulver auf die Fördereinrichtung in einem kontinuierlichen Materialstrom aufgestreut, und eine Fördergeschwindigkeit der Fördereinrichtung wird derart eingestellt, daß sich die einzelnen Stücke des Stückguts nicht überlappen bzw. eine vorbestimmte maximale Höhe des Pulvers nicht überschritten wird.

Im Schritt e) von Anspruch 1 können die Bilder des Stückguts auf der Fördereinrichtung in einer Datenverarbeitungsanlage anhand von gegenseitigen Überlappungsbereichen aneinander gefügt werden.

Bevorzugt werden fehlerhafte Stücke des Stückguts oder fehlerhafte Pulveranteile mit Hilfe einer Aussortiereinrichtung aussortiert, die in Förderrichtung vor oder nach der mindestens einen Kamera angeordnet ist

Wird mit den Verfahren die Masse von Stückgut bestimmt, so werden bevorzugt Stücke des Stückguts mit einem Projektionsflächenmaß, das kleiner als eine vorgegebene Mindestgröße ist, im Schritt e) von Anspruch 1 nicht berücksichtigt.

Wird mit dem Verfahren die Masse von Stückgut bestimmt, so können die Stücke im Schritt d) von Anspruch 1 von oberhalb und/oder unterhalb der Fördereinrichtung angeordneten Lichtquellen beleuchtet werden.

Wird mit dem Verfahren die Masse von Stückgut bestimmt, so werden von der mindestens einen Kamera im Schritt d) von Anspruch 1 bevorzugt Bilder von den auf der Fördereinrichtung angeordneten Stücken erzeugt, die die senkrechte Projektionsfläche des Stückguts auf die Fördereinrichtung zeigen.

Diese Aufgabe wird erfindungsgemäß vorrichtungsseitig gelöst durch eine Vorrichtung gemäß Anspruch 13.

Vorteilhaft ist die Fördereinrichtung ein Förderband oder eine Rüttelrinne.

Bevorzugt ist das Förderband oder die Rüttelrinne durch ein transparentes Material gebildet, und eine Lichtquelle darunter angeordnet, um ein Licht von der Lichtquelle durch das Pulver zu leiten bzw. die Stücke des Stückguts zu beleuchten.

Bevorzugt ist eine optische Achse der mindestens einen Kamera senkrecht zur Förderrichtung angeordnet.

Vorteilhaft umfaßt die Fördereinrichtung einen Abstreifer, der in Förderrichtung nach einer Abwurfkante der Fördereinrichtung angeordnet ist.

Die Lichtquelle kann eine IR-, UV- oder farbige Lichtquelle sein.

Diese Aufgabe wird erfindungsgemäß ferner gelöst durch ein Softwareprodukt mit Programmcodeinformationen zur Ausführung eines der oben beschriebenen Verfahrens, wobei das Softwareprodukt bevorzugt auf einem Speichermedium gespeichert ist.

Die Erfindung wird nachfolgend anhand von zwei Ausführungsbeispielen unter Bezugnahme auf eine Zeichnung erläutert. Es zeigen:
Fig. 1 eine schematische Darstellung einer Vorrichtung zur Bestimmung der Masse von einem auf einer Fördereinrichtung verteilten schütt- oder rieselfähigen Stückgut;
Fig. 2 eine schematische Darstellung der erfindungsgemäßen Vorrichtung zur Bestimmung der Masse von einem auf einer Fördereinrichtung verteilten schütt- oder rieselfähigen Stückgut;
Fig. 3 eine Draufsicht auf die Fördereinrichtung der Fig. 2;
Fig. 4 eine schematische Darstellung einer erfindungsgemäßen Vorrichtung zur Bestimmung der Masse von einem auf einer Fördereinrichtung verteilten Pulver;
Fig. 5A eine Draufsicht auf die Fördereinrichtung der Fig. 4; und
Fig. 5B eine Schnittansicht entlang der Linie VB - VB der Fig. 5A.

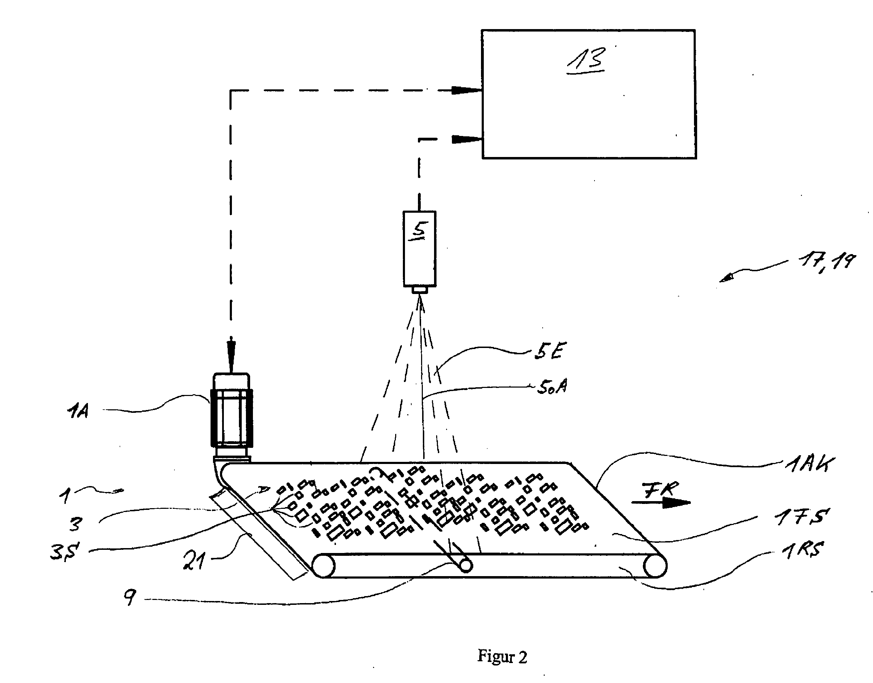

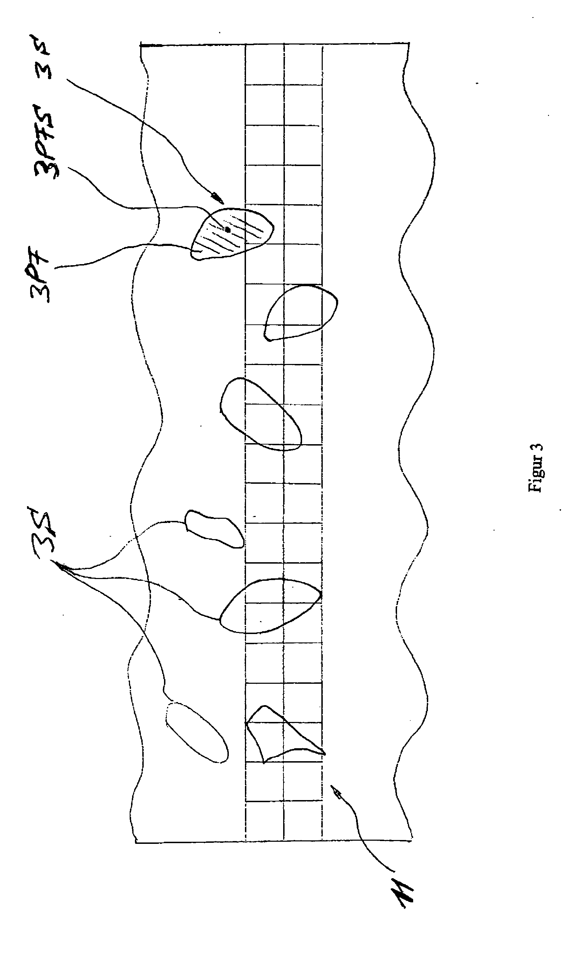

Unter Bezug auf die Fig. 2 und 3 wird folgend ein Verfahren zur Bestimmung der Masse von einem auf einer Fördereinrichtung 1 verteilten schütt- oder rieselfähigen Stückgut 3 beschrieben.

Eine Fördereinrichtung 1 in Fig. 2 in Form eines Förderbandes ist von einem Förderantrieb 1A angetrieben, der von einer Datenverarbeitungsanlage 13 gesteuert ist.

Die Datenverarbeitungsanlage 13 übermittelt eine gewünschte Soll-Geschwindigkeit an den Förderantrieb 1A, und erhält von dem Förderband 1 zugeordneten Impulsgebern den tatsächlichen Vorschub des Förderbandes 1. Die Datenverarbeitungsanlage 13 kann den Förderantrieb 1A daher so regeln, daß das Förderband 1 eine gewünschte Fördergeschwindigkeit aufweist.

Auf dem Förderband 1 sind Stücke 3S eines Stückguts 3 verteilt, wobei die Stücke 3S des Stückguts 3 derart auf dem Förderband 1 verteilt sind, daß sich ein überwiegender Teil derselben nicht gegenseitig überlappt.

Die Stücke 3S des Stückguts werden auf dem Förderband 1 entlang einer Förderrichtung FR gefördert, und an einer Abwurfkante 1AK des Förderbandes 1 von dem Förderband 1 abgegeben.

Dem Förderband 1 ist gegenüber der Abwurfkante 1AK ein Abstreifer 21 zugeordnet, der beim Rücklauf des Förderbandes 1 an dem Förderband 1 anhaftendes Stückgut 3 abstreift.

Das Förderband 1 ist transparent, beispielsweise aus einem durchsichtigen oder weißen Kunststoffmaterial gebildet, und zwischen einer Förderseite 1FS und einer Rücklaufseite 1RS des Förderbandes 1 ist eine Lichtquelle 9 angeordnet, so daß Lichtstrahlen von der Lichtquelle 9 durch die Förderseite 1FS des Förderbandes 1 verlaufen.

Die Lichtquelle 9 kann aus einer oder mehreren Lampen bestehen, wobei die Lichtquelle 9 bevorzugt entlang ihrer Längsachse eine konstante Beleuchtungsstärke aufweist. Der Lichtquelle 9 sind bevorzugt Reflektoren derart zugeordnet, daß Lichtstrahlen von der Lichtquelle 9 zum überwiegenden Teil senkrecht zur Ebene der Förderseite 1FS des Förderbandes 1 verlaufen.

Durch die beschriebene Anordnung der Lichtquelle 9 und des transparenten Förderbandes 1 werden die Stücke 3S des Stückguts 3 von unten beleuchtet.

Eine Beleuchtung der Stücke 3S des Stückguts 3 kann alternativ dadurch erreicht werden, daß eine oder mehrere Lampen oberhalb der Förderseite 1FS des Förderbandes 1 angeordnet sind.

Oberhalb des Förderbandes 1 ist eine Kamera 5 angeordnet, deren optische Achse 50A senkrecht zu der Ebene der Förderseite 1FS des Förderbandes 1 verläuft. Ein Erfassungsbereich 5E der Kamera 5 ist so eingestellt, daß er den von der Lichtquelle 9 durchleuchteten Bereich der Förderseite 1FS des Förderbandes 1 abdeckt.

Die Kamera 5 erstellt Zeilenbilder 11, wie in Fig. 3 dargestellt, von den Stücken 3S auf dem Förderband 1.

Dadurch, daß die Kamera 5 oberhalb der Förderseite 1FS des Förderbandes 1 angeordnet ist und die Stücke 3S des Stückguts 3 von unten beleuchtet werden, erstellt die Kamera 5 Bilder von den Stücken 3 S des Stückguts 3, die eine Projektionsfläche 3PF eines jeden Stückes 3 S auf die Förderseite 1FS des Förderbandes 1 zeigen. Dadurch, daß die Stücke 3S des Stückguts 3 von unten beleuchtet werden, zeigen die von der Kamera 5 erstellten Bilder die senkrechte Projektionsfläche der Stücke 3 S auf die Förderseite 1FS.

Das Auslösen der Kamera 5 wird von der Datenverarbeitungsanlage 13 gesteuert. Die Datenverarbeitungsanlage erhält, wie oben beschrieben, von nicht dargestellten Impulsgebern den tatsächlichen Vorschub des Förderbandes 1, und verwendet diese Daten, um das Auslösen des Kamera 5 so zu triggern, daß aufeinanderfolgende Bilder ohne Überlappungsbereich aneinander gefügt werden können, um einen "Endlosfilm" der auf dem Förderband 1 angeordneten Stücke 3 S zu erhalten.

In der Datenverarbeitungsanlage 13 werden die aufeinanderfolgenden Bilder der Kamera 5 aneinander gefügt, und wie folgt verarbeitet.

Die Datenverarbeitungsanlage 13 ordnet jedem geschwärzten Bereich auf einem der Bilder der Kamera 5, das heißt einer Projektionsfläche 3PF eines Stückes 3S, einen Flächenschwerpunkt 3PFS zu, der durch ein einfaches mathematisches Verfahren bestimmt wird, beispielsweise durch ein Tangentenverfahren. Ferner bestimmt die Datenverarbeitungsanlage 13 von jeder Projektionsfläche 3PF eines Stückes 3S das Maß.

Da die Kamera 5 in einem festen Abstand von der Abwurfkante 1AK des Förderbandes 1 angeordnet ist und der Datenverarbeitungsanlage 13 der tatsächliche Vorschub des Förderbandes 1 durch die Impulsgeber bekannt ist, liegen in der Datenverarbeitungsanlage 13 Daten über jedes Stück 3S vor, die den Abstand des Projektionsflächenschwerpunkts 3PFS von der Abwurfkante 1AK und das Projektionsflächenmaß des jeweiligen Stückguts 3 S angeben.

Den Stücken 3S des Stückguts wird in der Datenverarbeitungsanlage 13 folgend dadurch eine Masse zugeordnet, daß das Projektionsflächenmaß eines jeden Stückes 3 S mit einer durchschnittlichen Flächenmasse multipliziert wird, die wie folgt bestimmt wird.

### Bestimmung der durchschnittlichen Flächenmasse

Eine vorbestimmte Masse des Stückguts 3 wird auf dem Förderband 1 verteilt, und durch den Erfassungsbereich 5E der Kamera 5 geleitet. In der Datenverarbeitungsanlage 13 wird das Projektionsflächenmaß für jedes Stück 3 S des Stückguts 3 bestimmt, und die einzelnen Projektionsflächenmaße werden zu einem Gesamtprojektionsflächenmaß addiert.

Die durchschnittliche Flächenmasse ergibt sich aus dem Quotienten von der vorbestimmten Masse zu dem gesamten Gesamtprojektionsflächenmaß des Stückguts 3.

Die auf diese Weise bestimmte durchschnittliche Flächenmasse gibt somit an, wie viel Masse durchschnittlich mit einem bestimmten Projektionsflächenmaß verbunden ist. Dadurch, daß auf dem Förderband 1 eine große Anzahl von Stücke 3S angeordnet ist, und deren Masse nicht erheblich voneinander abweicht, gleichen sich Fehler bei der Massenbestimmung einzelner Stücke 3S aus, wodurch die Masse von beispielsweise auf einem Meter Förderband 1 angeordneten Stücken 3S mit einem Fehler bestimmt werden kann, der kleiner als 10% ist.

Die auf diese Weise bestimmte durchschnittliche Flächenmasse ist für das jeweilige Gut und dessen Herstellungsverfahren charakteristisch. Daher muss die durchschnittliche Flächenmasse für jede Art von Stückgut 3 individuell bestimmt werden.

Beispielsweise können sich die durchschnittlichen Flächenmassen eines Stückguts 3 unterscheiden, wenn dieses zu verschiedenen Zeiten von einem Ausgangsprodukt hergestellt wurde. Handelt es sich bei dem Stückgut 3 beispielsweise um Gemüsestücke, die einmal von Gemüse vor der Reife und einmal von Gemüse nach der Reife hergestellt wurden, so können sich die durchschnittlichen Flächenmasse voneinander unterscheiden, da die Gemüsestücke einen unterschiedlichen Wassergehalt aufweisen.

Ferner kann die durchschnittliche Flächenmasse von der Art der Stücke 3S des Stückguts 3 abhängig sein. Werden Äpfel beispielsweise einmal in Viertel geteilt und einmal in Scheiben geschnitten, so wird sich die durchschnittlichen Flächenmasse derselben voneinander unterscheiden.

### Waage

Die unter Bezug auf Fig. 2 beschriebene Anordnung kann somit als Waage 17 dienen.

Zu diesem Zweck wird eine Menge des Stückguts 3, dessen Masse bestimmt werden soll, auf dem Förderband 1 verteilt. Die Stücke 3S des Stückguts 3 werden durch den Erfassungsbereich 5E der Kamera 5 geführt, und die Datenverarbeitungsanlage 13 bestimmt die Projektionsflächenmasse der einzelnen Stücke 3S des Stückguts und addiert diese zu einem Gesamtprojektionsflächenmaß auf.

Sind sämtliche Stücke 3S des Stückguts 3 durch den Erfassungsbereich 5E der Kamera 5 geführt, und ist das Gesamtprojektionsflächenmaß der Stücke 3S des Stückguts 3 bestimmt, so wird dieses mit dem durchschnittlichen Flächenmaß multipliziert, um die Gesamtmasse des durchgeleiteten Stückguts 3 zu bestimmen.

### Dosier- und Abgabevorrichtung

Die unter Bezug auf Fig. 2 beschriebene Anordnung kann ferner als Dosier- und Abgabevorrichtung 19 für Stückgut 3 verwendet werden.

Zu diesem Zweck werden die Stücke 3S des Stückguts 3 auf dem Förderband 1 verteilt, und durch den Erfassungsbereich 5E der Kamera 5 geführt.

In der Datenverarbeitungsanlage 13 werden das Projektionsflächenmaß und der Projektionsflächenschwerpunkt 3PFS für jedes Stück 3S des Stückguts 3 bestimmt.

Folgend werden die Projektionsflächenmaße eines jeden Stückes 3S mit der durchschnittlichen Flächenmasse multipliziert, um die Masse eines jeden Stückes 3S des Stückguts 3 zu bestimmen.

Wie oben beschrieben, liegen nun in der Datenverarbeitungsanlage 13 Daten vor, die für jedes Stückgut 3S die Masse desselben und dessen Abstand von der Abwurfkante 1AK des Förderbandes 1 angeben (Abstand Projektionsflächenschwerpunkt 3PFS von Abwurfkante 1AK).

Verlangt ein Bediener der Dosier- und Abgabevorrichtung 19 folgend eine bestimmte Masse des Stückguts 3, so beginnt die Datenverarbeitungsanlage 13 ausgehend von der Abwurfkante 1AK entgegen der Förderrichtung FR die Masse der einzelnen Stücke 3S des Stückguts 3 aufzusummieren, bis die gewünschte Masse erreicht ist. Die Datenverarbeitungsanlage 13 erhält auf diese Weise eine Förderlänge, die von dem Förderband 1 abgefördert werden muss, um die von dem Bediener verlangte Masse des Stückguts 3 abzugeben.

Folgend sendet die Datenverarbeitungsanlage 13 ein entsprechendes Signal an den Förderantrieb 1A, der daraufhin das Förderband 1 um die berechnete Förderlänge abfördert, wodurch der Bediener die angeforderte Masse des Stückguts 3 erhält. Bevorzugt vergleicht die Datenverarbeitungsanlage 13 dabei den Soll-Wert des Vorschubs mit dem Ist-Wert des Vorschubs, der von den Impulsgebern übermittelt wird, und führt gegebenenfalls eine Korrektur durch.

Die von dem Bediener angeforderte Masse kann größer oder kleiner als die Masse sein, die zwischen der Abwurfkante 1AK und der Lichtquelle 9 auf der Förderseite 1FS der Förderbands 1 angeordnet ist. Ist die von dem Bediener angeforderte Masse des Stückguts 3 kleiner als die in diesem Bereich aufliegende Masse, so kann die Datenverarbeitungsanlage 13 direkt die abzufördernde Förderlänge berechnen und abfördern. Ist die von dem Bediener angeforderte Masse größer als die in diesem Bereich aufliegende Masse des Stückguts 3, so berechnet die Datenverarbeitungsanlage 13 die Masse der durch den Erfassungsbereich 5E der Kamera 5 geführten Stücke 3S des Stückguts und schiebt das Förderband 1 so lange vor, bis die angeforderte Masse von dem Förderband 1 abgefördert ist. Aufgrund der Einfachheit des Verfahrens kann das Förderband 1 selbst in letzterem Fall mit einer hohen Fördergeschwindigkeit betrieben werden.

Alternativ zu dem Abfördern einer bestimmten Förderlänge des Förderbandes 1 kann die Abwurfkante 1AK des Förderbandes 1 eine entsprechende Länge zurückgezogen werden (Rückzugskante).

Vor oder hinter dem Erfassungsbereich 5E der Kamera 5 kann eine im Stand der Technik bekannte Aussortiervorrichtung angeordnet sein, um fehlerhaftes Stückgut 3 von dem Förderband 1 auszusortieren.

Die Genauigkeit des zuvor beschriebenen Verfahrens zur Bestimmung der Masse von Stückgut 3 ist durch die Auflösung der Kamera 5 beschränkt, da ein Stück 3S des Stückguts 3, das eine Größe aufweist, die kleiner als die Auflösung der Kamera ist, nicht erfasst wird.

Die Kamera 5 in dem Ausführungsbeispiel der Fig. 2 weist vorliegend 1024 Pixel auf und deckt damit eine Breite des Förderbandes 1 von 250 mm ab, so daß ein Pixel ungefähr 0,25 mm entspricht. Daher werden Stücke 3S mit einem Projektionsflächenmaß von kleiner als 0,06 mm² von der Kamera 5 und der Datenverarbeitungsanlage 13 nicht erfasst.

Die Datenverarbeitungsanlage 13 kann zusätzlich so programmiert sein, daß sie Stücke 3S mit einem Projektionsflächenmaß unterhalb einer vorbestimmten Grenze generell nicht berücksichtigt. Die Datenverarbeitungsanlage 13 kann beispielsweise so eingerichtet sein, daß sie Stücke 3S unberücksichtigt lässt, die ein Projektionsflächenmaß von weniger als 1 mm² aufweisen. Wird eine derartige Dosier- und Abgabevorrichtung 19 beispielsweise in der Nahrungsmittelindustrie verwendet, um eine vorbestimmte Masse gefrorenen Hackfleisches auf eine Fertigpizza zu geben, so erhält der Käufer der Fertigpizza die vorbestimmte Masse des Hackfleisches und zusätzlich die Stücke des Hackfleisches, die eine Fläche kleiner als 1 mm² aufweisen.

Wird die Anordnung der Fig. 2 als Waage verwendet, so ist die Fördergeschwindigkeit des Förderbandes 1 bevorzugt konstant. Wird die Anordnung der Fig. 2 als Dosier- und Abgabevorrichtung verwendet, so wird das Förderband 1 zu Beginn des Abgebens des Stückguts 3 zunächst beschleunigt und gegen Ende des Abgebens abgebremst. Das Förderband 1 sollte in jedem Fall so beschleunigt werden, daß die Stücke 3S des Stückguts 3 auf dem Förderband 1 nicht verrutschen, da dann die in der Datenverarbeitungsanlage 13 vorliegenden Projektionsflächenschwerpunkte 3PFS nicht mehr mit den tatsächlichen übereinstimmen. Das Förderband 1 kann daher Vertiefungen, beispielsweise Senkungen, aufweisen, um ein Verrutschen des Stückguts zu verhindern. Alternativ oder zusätzlich kann das Förderband 1 eine rutschfeste Oberfläche aufweisen.

Das Stückgut 3 wird bevorzugt in einem Wasserfallverfahren auf dem Förderband 1 verteilt. Dies kann beispielsweise dadurch erreicht werden, daß das Stückgut 3 in einem kontinuierlichen Materialstrom von einem Zuführband auf das Förderband 1 abgegeben wird, wobei das Verhältnis der Fördergeschwindigkeiten derart eingestellt ist, daß sich die einzelnen Stücke 3S des Stückguts 3 auf dem Förderband 1 zum überwiegenden Teil nicht überlappen.

Das zuvor unter Bezug auf die Fig. 2 und 3 beschriebene Ausführungsbeispiel ist beschränkt auf Stückgut, das eine Mindestgröße aufweist, die größer als die Auflösung der Kamera 5 ist.

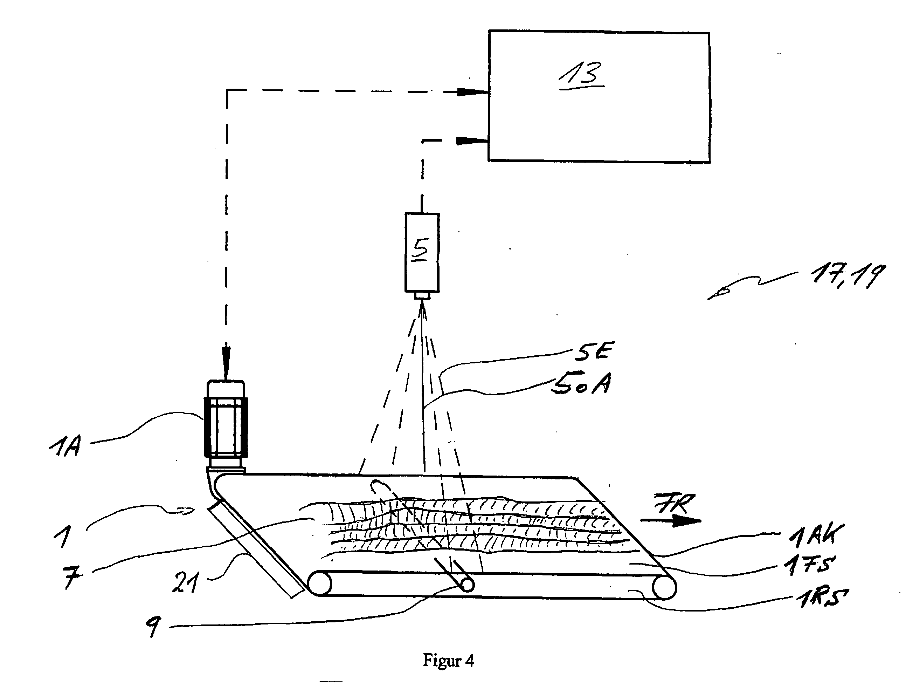

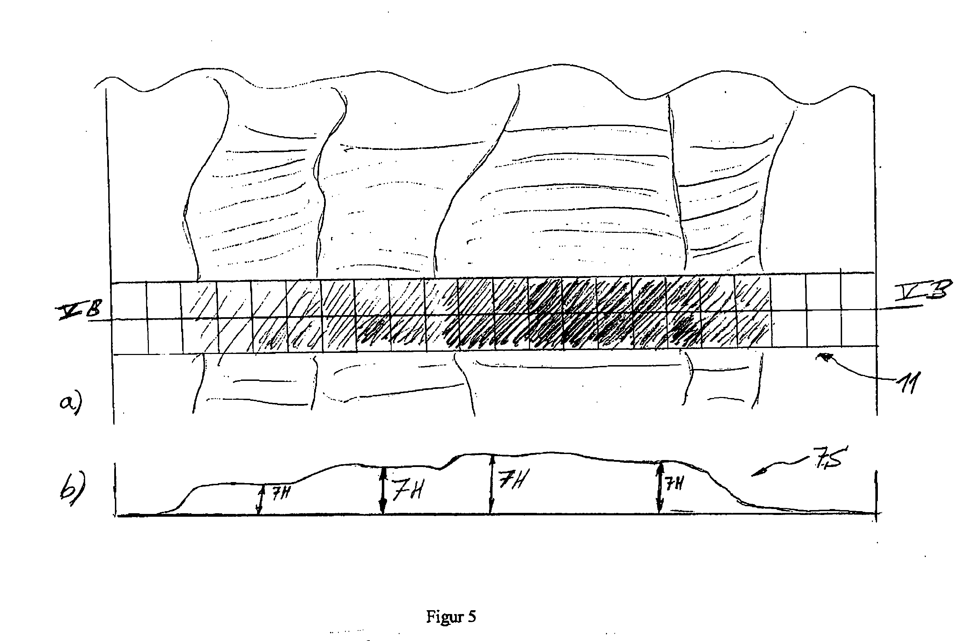

Unter Bezug auf die Fig. 4 und 5 ist nachfolgend ein Ausführungsbeispiel für die Verarbeitung von Pulver 7 beschrieben, das vom Aufbau her identisch zu dem unter Bezug auf die Fig. 2 und 3 beschriebenen Ausführungsbeispiel ist, sich jedoch dadurch unterscheidet, daß die Datenverarbeitungsanlage 13 programmtechnisch anders eingerichtet ist.

Das Förderband 1 der Fig. 4 ist im Gegensatz zu dem der Fig. 2 daher mit einem Pulver 7 bedeckt. Das Pulver 7 weist eine Korngröße auf, die kleiner als die Auflösung der Kamera 5 ist, so daß die Körner des Pulvers vorliegend einen Durchmesser aufweisen, der kleiner als 0,25 mm ist.

Das Pulver ist hinsichtlich seiner Korngrößenverteilung, seiner Farbe, seines Glanzes, seiner Transparenz und Feuchtigkeit weitgehend homogen. Als ein Bespiel für das Pulver 7 sei Mehl, Zucker oder Stärke genannt.

Wird das Pulver 7 über die Lichtquelle 9 geleitet, so tritt in den Bereichen, in denen das Pulver 7 dünn auf dem Förderband 1 aufliegt, viel Licht und in den Bereichen, in denen das Pulver 7 dick auf dem Förderband 1 aufliegt, wenig Licht nach oben aus.

In der Draufsicht der Fig. 5A sind in dem Zeilenbild 11 der Kamera 5 daher Bereiche stark geschwärzt, in denen das Pulver 7 dick auf dem Förderband 1 aufliegt, und Bereiche wenig geschwärzt, in denen das Pulver dünn aufliegt.

Die Graustufenwerte in dem Zeilenbild 11A der Fig. 5A entsprechen somit einer Höhe 7H des Pulvers 7 auf dem Förderband 1, so daß sich die einzelnen Graustufenwerte der Pixel zu einem Schichthöhenprofil 7S des Pulvers 7 auf dem Förderband 1 zusammensetzen lassen, das in Fig. 5B gezeigt ist.

Die Umrechnung der Graustufenwerte in dem Zeilenbild 11 der Fig. 5A in eine Schichthöhe 7H des Pulvers 7 auf dem Förderband erfolgt dabei mittels einer Schichthöhe-Intensitäts-Relation, die für jedes Pulver 7 beispielsweise wie folgt bestimmt wird.

### Bestimmung der Schichthöhe-Intensitäts-Relation

Auf dem Förderband 1 wird mittels einer Rakel und/oder Bürste eine vorbestimmte Schichthöhe des Pulvers 7 aufgetragen, und der dieser Höhe 7H des Pulvers 7 entsprechende Graustufenwert mittels der Datenverarbeitungsanlage 13 und der Kamera 5 bestimmt. Dieser Vorgang wird für mindestens 5, bevorzugt mehr als 10, und weiter bevorzugt mehr als 15 Höhen 7H des Pulvers 7 wiederholt.

Auf diese Weise entsteht eine Zuordnungstabelle, die jeder von beispielsweise 10 gemessenen Höhen 7H des Pulvers 7 auf dem Förderband 1 einen Graustufenwert in dem Zeilenbild 11 der Kamera 5 zuordnet.

Bei der Auswahl der zu vermessenen Höhen 7H des Pulvers 7 auf dem Förderband 1 für die Erstellung der Zuordnungstabelle ist zu beachten, daß es für ein jedes Pulver 7 eine individuelle maximale Höhe 7H gibt, oberhalb der jeder Höhe 7H des Pulvers 7 auf dem Förderband 1 derselbe Graustufenwert zugeordnet wird, nämlich der maximale Graustufenwert. Die 10 zu vermessenen Schichthöhen sollten daher so gewählt sein, daß diese gleichmäßig zwischen 0 mm und der maximalen Höhe 7H des Pulvers 7 verteilt sind.

Vor dem Erfassungsbereich 5E der Kamera 5 sollte daher eine Rakel angeordnet sein, die auf diese maximale Höhe des Pulvers 7 eingestellt ist, um sicher zu stellen, daß das Pulver 7 nicht mit einer größeren Höhe 7H in den Erfassungsbereich 5E der Kamera geführt wird, so daß jeder Höhe 7H des Pulvers 7 in dem Erfassungsbereich 5E der Kamera 5 ein entsprechender Graustufenwert zugeordnet werden kann.

Die Werte der Zuordnungstabelle werden folgend mittels eines bekannten Interpolationsverfahrens interpoliert, wodurch sich eine stetige Funktion ergibt, die Schichthöhe-Intensitäts-Relation.

Da zwischen der gemessenen Intensität (Graustufenwert) und der Höhe 7H des Pulvers 7 auf dem Förderband 7 grundsätzlich ein exponentieller Zusammenhang bestehen sollte, ist es zweckmäßig, den Interpolationsverfahren eine Exponentialfunktion zugrunde zu legen.

Die Schichthöhe-Intensitäts-Relation hängt von einer großen Anzahl von Parametern ab, beispielsweise der Korngröße, der Korngrößenverteilung, der Farbe, dem Glanz, der Transparenz und der Feuchtigkeit des Pulvers 7. Aufgrund dieser großen Anzahl an Parametern sollte die Schichthöhe-Intensitäts-Relation für jedes Pulver 7 individuell bestimmt werden.

Mit dem zuvor beschriebenen Verfahren wird die Schichthöhe-Intensitäts-Relation als kontinuierliche Funktion erzeugt, wodurch sich geringe Fehlertoleranzen bei der Bestimmung der Masse ergeben. Sind größere Fehlertoleranzen erlaubt, so kann die Verwendung der oben beschriebenen Zuordnungstabelle ausreichend sein, wobei diese jedoch eine den Fehlertoleranzen angepasste Anzahl von vermessenen Höhen 7H und eine optimale Verteilung der Höhen 7H aufweisen sollte.

### Waage

Die unter Bezug auf Fig. 4 beschriebene Anordnung kann daher als Waage 17 verwendet werden, wie folgend beschrieben.

Auf dem Förderband 1 wird das Pulver 7 verteilt, wobei von dem Pulver 7 die Schichthöhe-Intensitäts-Relation, wie zuvor beschrieben, bestimmt worden ist. Vor dem Erfassungsbereich 5E der Kamera 5 ist eine Rakel angeordnet, die auf eine für das Pulver 7 maximale Höhe eingestellt ist.

Das auf dem Förderband 1 angeordnete Pulver 7 wird durch den Erfassungsbereich 5E der Kamera 5 geführt, und die zugehörigen Graustufenwerte werden von der Datenverarbeitungsanlage 13 ermittelt. Mit Hilfe der Schichthöhe-Intensitäts-Relation ergibt sich daraus ein Schichthöhenprofil 7S des Pulvers 7 auf dem Förderband 1, wie beispielsweise in Fig. 5b dargestellt.

Da der Datenverarbeitungsanlage 13 der tatsächliche Vorschub des Förderbands 1 bekannt ist (durch die dem Förderband 1 zugeordneten Impulsgeber), kann das Schichthöhenprofil in ein Volumenprofil des Pulvers 7 auf dem Förderband 1 umgerechnet werden.

Wird das auf diese Weise bestimmte Volumenprofil mit der Dichte des Pulvers 7 multipliziert, so ergibt sich eine Massenverteilung (oder ein Massenprofil) des Pulvers 7 auf dem Förderband 1.

Die Bestimmung der Masse einer vorbestimmten Menge eines Pulvers 7 kann mit der Anordnung gemäß der Fig. 4 somit auf einfache Weise dadurch erfolgen, daß das Pulver 7 auf dem Förderband 1 verteilt und durch den Erfassungsbereich 5E der Kamera 5 geführt wird.

Die unter Bezug auf Fig. 4 beschriebene Waage 17 ist somit identisch mit der unter Bezug auf Fig. 2 beschriebenen Waage 17, bis auf die Tatsache, daß die Berechnung der Masse des Pulvers mittels eines Volumenprofils gegenüber der Berechnung der Masse von Stücken 3S mittels eines Projektionsflächenmaßes erfolgt.

### Dosier- und Abgabevorrichtung

Die unter Bezug auf Fig. 4 beschriebene Anordnung kann ebenfalls als Dosier- und Abgabevorrichtung 19 verwendet werden.

Wie zuvor beschrieben, liegt in der Datenverarbeitungsanlage 13 die Massenverteilung des Pulvers 7 auf dem Förderband 1 vor.

Wird nun von einem Bediener eine bestimmte Masse des Pulvers 7 abgefordert, so addiert die Datenverarbeitungsanlage 13 ausgehend von der Abwurfkante 1AK des Förderbandes 1 entgegen der Förderrichtung FR die auf dem Förderband 1 aufliegende Masse des Pulvers 7 auf, bis die von dem Bediener angeforderte Masse erreicht ist.

Auf diese Weise ergibt sich eine abzufördernde Förderlänge des Förderbandes 1 in der Datenverarbeitungsanlage 13, und die Datenverarbeitungsanlage 13 steuert den Förderantrieb 1A derart, daß diese Förderlänge von dem Förderband 1 abgefördert wird, um dem Bediener 1 die gewünschte Masse des Pulvers 7 zur Verfügung zu stellen, wobei der IST-Wert des Vorschubs bevorzugt mit dem SOLL-Wert des Vorschubs in der Datenverarbeitungsanlage 13 verglichen und gegebenenfalls korrigiert wird.

Die Unter Bezug auf Fig. 4 beschriebene Dosier- und Abgabevorrichtung kann somit genau so wie die unter Bezug auf Fig. 2 beschriebene Dosier- und Abgabevorrichtung betrieben werden, und unterscheidet sich lediglich dadurch, daß die Masse des Pulvers 7 mittels eines Volumenprofils im Gegensatz zu einem Projektionsflächenmaß bei einem Stückgut 3 bestimmt wird.

Das unter Bezug auf die Fig. 4 und 5 beschriebene Ausführungsbeispiel setzt eine Transmission des von der Lichtquelle 9 ausgehenden Lichts durch das Pulver 7 voraus. Das Förderband 1 und die Beleuchtung 9 müssen gegenüber dem unter Bezug auf die Fig. 2 und 3 beschriebenen Ausführungsbeispiel daher höhere Anforderungen erfüllen. Das Förderband 1, des unter Bezug auf die Fig. 4 und 5 beschriebenen Ausführungsbeispiels, muss bezüglich der Homogenität und Konstanz der Lichtdurchlässigkeit höhere Anforderungen erfüllen als das Förderband 1, des unter Bezug auf die Fig. 2 und 3 beschriebenen Ausführungsbeispiels. Ferner muss die Lichtquelle 9 in Fig. 4 bezüglich der Homogenität und der Konstanz der Beleuchtungsstärke höhere Anforderungen erfüllen als die unter Bezug auf die Fig. 2 beschriebene.

Die Lichtquelle 9 kann in den oben beschriebenen Ausführungsbeispielen eine normale Weißlichtquelle sein. Die Lichtquelle 9 kann insbesondere jedoch eine IR-, UV- oder farbige Lichtquelle sein. Dies ist insbesondere bei der Transmission des Pulvers 7 vorteilhaft, da mit anderen Wellenlängen eventuell eine tiefere Durchdringung des Pulvers 7 erreicht werden kann, wodurch sich die maximale Höhe des auf dem Förderband 1 angeordneten Pulvers 7 erhöht, so daß ein größerer Durchsatz an Pulver 7 erreicht werden kann. Ferner kann eine Kamera 5 mit einer Gamma-Korrektur verwendet werden, so daß bereits in der Kamera 5 dunkle Bildinhalte überproportional heller dargestellt werden (verschiedene Kennlinien). Alternativ kann dies durch eine digitale Bildbearbeitung in der Datenverarbeitungsanlage 13 durchgeführt werden.

Die Verfahren der Bestimmung der Masse des Stückguts 3 bzw. des Pulvers 7 werden in der Datenverarbeitungsanlage 13 bevorzugt von einer Software ausgeführt, die entsprechend programmiert ist. Da die Anordnungen der Fig. 2 und Fig. 4 aus denselben Komponenten aufgebaut sind und sich nur durch die Art der Berechnung der Masse des Stückguts 3 bzw. des Pulvers 7 unterscheiden, genügt ein Wechsel der Software, um mit der Anordnung der Fig. 2 die Masse von Pulver 7 bzw. mit der Anordnung der Fig. 4 die Masse von Stückgut 3 zu bestimmen.

### Bezugszeichenliste:

- 1: Fördereinrichtung (Förderband)
- 1A: Förderantrieb
- 1AK: Abwurfkante des Förderbandes 1
- 1FS: Förderseite des Förderbandes 1
- 1RS: Rücklaufseite des Förderbandes 1
- 3: Stückgut
- 3S: Stück des Stückguts
- 3PF: Projektionsfläche eines Stückes des Stückguts
- 3PFS: Projektionsflächenschwerpunkt eines Stückes des Stückguts
- 5: Kamera
- 5E: Erfassungsbereich der Kamera
- 50A: optische Achse der Kamera
- 7: Pulver
- 7S: Schichthöhenprofil des Pulvers
- 7H: Höhe des Pulvers auf der Fördereinrichtung 1
- 9: Lichtquelle
- 11: Zeilenbild
- 13: Datenverarbeitungsanlage
- 17: Waage
- 19: Dosier- und Abgabevorrichtung
- 21: Abstreifer
- FR: Förderrichtung

## Patentansprüche

1. Verfahren zur Bestimmung der Masse von einem auf einer Fördereinrichtung (1) befindlichen Stückgut (3), das die Schritte umfaßt:
a) Verteilen einzelner Stücke (3 S) des Stückguts (3) auf der Fördereinrichtung (1) derart, daß sich mindestens die Hälfte derselben nicht gegenseitig in einer festgelegten Projektionsrichtung überlappen,
b) Fördern des Stückguts (3) auf der Fördereinrichtung (1) entlang einer Förderrichtung (FR) durch einen Erfassungsbereich (5E) mindestens einer Kamera (5),
c) Erzeugen von aneinander anschließenden oder teilweise überlappenden Bildern der Stücke (3S) in dem Erfassungsbereich (5E) mit Hilfe der Kamera (5),
wobei von der Kamera (5) Zeilenbilder erzeugt werden, die eine Breite der Fördereinrichtung (1) abdecken,
d) Erzeugen von geometrischen Daten der Stücke (3S) auf der Grundlage der Bilder in Abhängigkeit von der Position der Stücke (3S) auf der Fördereinrichtung (1), und
e) Berechnen der Masse der auf der Fördereinrichtung (1) angeordneten Stücke (3S) aufgrund der geometrischen Daten derselben in Abhängigkeit von der Position der Stücke (3S) auf der Fördereinrichtung (1), wobei das Projektionsflächenmaß der Stücke (3S) mit der durchschnittlichen Flächenmasse multipliziert wird,
wobei
f) für das Stückgut (3) vorab eine durchschnittliche Flächenmasse bestimmt wird,
g) als ein Teil der geometrischen Daten im Schritt e) ein Projektionsflächenmaß einer Projektionsfläche (3PF) eines jeden Stückes (3S) des Stückguts (3) in der festgelegten Projektionsrichtung bestimmt wird und
h) das Auslösen der Kamera (5) von einem Signal getriggert wird, das den Vorschub der Fördereinrichtung (1) wiedergibt.

2. Verfahren nach Anspruch 1, wobei zur Bestimmung der durchschnittlichen Flächenmasse des Stückguts (3) eine vorbestimmte Masse des Stückguts (3) auf der Fördereinrichtung (1) verteilt und durch den Erfassungsbereich (5E) der Kamera (5) geleitet wird, und die Projektionsflächenmaße von Stücken (3 S) dieses Stückguts (3) zu einem Gesamtprojektionsflächenmaß addiert werden, so daß sich die durchschnittliche Flächenmasse als Quotient der vorbestimmten Masse und des Gesamtprojektionsflächenmaßes des Stückguts (3) ergibt.

3. Verfahren nach Anspruch 1 oder 2, wobei als ein Teil der geometrischen Daten im Schritt e) ein Projektionsflächenschwerpunkt (3PFS) von der Projektionsfläche (3PF) eines jeden Stückes (3S) des Stückguts (3) bestimmt wird.

4. Verfahren nach einem der vorangehenden Ansprüche, wobei im Schritt e) die Bilder des Stückguts (3) auf der Fördereinrichtung (1) in einer Datenverarbeitungsanlage anhand von gegenseitigen Überlappungsbereichen aneinander gefügt werden.

5. Verfahren nach einem der vorangehenden Ansprüche, wobeiStücke (3S) des Stückguts (3) mit einem Projektionsflächenmaß, das kleiner als eine vorgegebene Mindestgröße ist, im Schritt f) nicht berücksichtigt werden.

6. Verfahren nach einem der vorangehenden Ansprüche, wobei die Stücke (3 S) im Schritt d) von oberhalb und/oder unterhalb der Fördereinrichtung (1) angeordneten Lichtquellen (9) beleuchtet werden.

7. Verfahren nach einem der vorangehenden Ansprüche, wobei die mindestens eine Kamera (5) im Schritt d) Bilder von den auf der Fördereinrichtung (1) angeordneten Stücken (3S) erzeugt, die die senkrechte Projektionsfläche des Stückguts (3) auf die Fördereinrichtung (1) zeigen.

8. Verfahren zur Bestimmung der Masse von einem auf einer Fördereinrichtung (1) befindlichen Pulver (7), das die Schritt umfaßt:
a) Bestimmen einer Schichthöhe-Intensitäts-Relation für das Pulver, wodurch sich eine Zuordnung der von einer Kamera (5) erfassten Intensität einer Lichtquelle (9), die das Pulver (7) durchleuchtet, zu einer Schichthöhe des Pulvers (7) ergibt,
b) Verteilen des Pulvers (7) auf der Fördereinrichtung (1),
c) Fördern des Pulvers (7) auf der Fördereinrichtung (1) entlang einer Förderrichtung (FR) durch einen Erfassungsbereich (5E) mindestens einer Kamera (5), in dem das Pulver (7) von einer Lichtquelle (9) durchleuchtet wird,
d) Erzeugen von aneinander anschließenden oder teilweise überlappenden Bildern des Pulvers (7) in dem Erfassungsbereich (5E) mit Hilfe der Kamera (5),
e) Bestimmen einer Schichthöhe (7H) des Pulvers (7) auf der Fördereinrichtung (1) mittels der in den Bildern der Kamera (5) erfassten Intensität der Lichtquelle (9) anhand der Schichthöhe-Intensitäts-Relation, um ein Schichthöhenprofil (7S) und daraus ein Volumenprofil des Pulvers (7) auf der Fördereinrichtung (1) zu bestimmen, und
f) Multiplizieren des Volumenprofils des Pulvers (7) mit der Dichte des Pulvers (7), wobei
g) von der Kamera (5) Zeilenbilder erzeugt werden, die eine Breite der Fördereinrichtung (1) abdecken und
h) das Auslösen der Kamera (5) von einem Signal getriggert wird, das den Vorschub der Fördereinrichtung (1) wiedergibt.

9. Verfahren nach Anspruch 8, wobei zur Bestimmung der Schichthöhe-Intensitäts-Relation vorbestimmte Höhen (7H) des Pulvers (7) auf der Fördereinrichtung (1) verteilt und durch den Erfassungsbereich (5E) der Kamera (5) geleitet werden, um jeder Schichthöhe eine Intensität der Lichtquelle (9) zuzuordnen.

10. Verfahren nach einem der vorangehenden Ansprüche, wobei das Stückgut (3) oder das Pulver (7) auf die Fördereinrichtung (1) in einem kontinuierlichen Materialstrom aufgestreut wird, und eine Fördergeschwindigkeit der Fördereinrichtung (1) derart eingestellt wird, daß sich die einzelnen Stücke (3S) des Stückguts (3) nicht überlappen bzw. eine vorbestimmte maximale Höhe (7H) des Pulvers (7) nicht überschritten wird.

11. Verfahren nach einem der vorangehenden Ansprüche, wobei das Stückgut (3) oder das Pulver (7) im Schritt c) mit einer kontinuierlichen Geschwindigkeit durch den Erfassungsbereich (5E) der mindestens einen Kamera (5) geführt wird.

12. Verfahren nach einem der vorangehenden Ansprüche mit Aussortieren von fehlerhaften Stücken (3S) des Stückguts (3) oder Pulveranteilen mit Hilfe einer Aussortiereinrichtung, die in Förderrichtung (FR) vor oder nach der mindestens einen Kamera (5) angeordnet ist.

13. Vorrichtung (17) zur Bestimmung der Masse eines schütt- oder rieselfähigen Stückguts (3) oder Pulvers (7) durch ein Verfahren gemäß einem der Ansprüche 1 bis 12 mit einer Fördereinrichtung (1), auf der das Stückgut (3) oder Pulver (7) verteilt angeordnet ist, mindestens einer Kamera (5), die auf die Fördereinrichtung (1) gerichtet ist und Bilder des auf der Fördereinrichtung (1) angeordneten Stückguts (3) oder Pulvers (7) erzeugt, sowie einer Datenverarbeitungsanlage (13), die die von der Kamera (5) erzeugten Bilder erhält und auswertet, um die Masse des Stückguts (3) oder Pulvers (7) zu bestimmen, wobei die Vorrichtung so eingerichtet ist, dass von der Kamera Zeilenbilder erzeugt werden und daß das Auslösen der Kamera (5) von einem Signal getriggert wird, das den Vorschub der Fördereinrichtung (1) wiedergibt.

14. Vorrichtung (19) nach Anspruch 13, wobei die Vorrichtung zur dosierten Abgabe eines schütt- oder rieselfähigen Stückguts (3) oder Pulvers (7) eingerichtet ist und eingerichtet ist, die Position von Stücken (3S) des Stückguts (3) oder die Massenverteilung des Pulvers (7) auf der Fördereinrichtung (1) zu bestimmen.

15. Vorrichtung nach Anspruch 13 oder 14, wobei die Fördereinrichtung (1) ein Förderband oder eine Rüttelrinne ist.

16. Vorrichtung nach Anspruch 15, wobei das Förderband oder die Rüttelrinne durch ein transparentes Material gebildet ist und eine Lichtquelle (9) darunter angeordnet ist, um Licht von der Lichtquelle (9) durch das Pulver (7) zu leiten bzw. die Stücke (3 S) des Stückguts (3) zu beleuchten.

17. Vorrichtung nach einem der Ansprüche 13 bis 16, wobei eine optische Achse (5oA) der mindestens einen Kamera (5) senkrecht zur Förderrichtung (FR) ist

18. Vorrichtung nach einem der Ansprüche 13 bis 17, wobei die Fördereinrichtung (1) einen Abstreifer (21) umfaßt, der in Förderrichtung (FR) nach einer Abwurfkante (1AK) der Fördereinrichtung (1) angeordnet ist.

19. Vorrichtung nach einem der Ansprüche 13 bis 18, wobei die Lichtquelle eine IR-, UV- oder farbige Lichtquelle ist.

20. Softwareprodukt umfassend Programmcodeinformationen zur Ausführung des Verfahrens nach einem der Ansprüche 1 bis 12.

21. Softwareprodukt nach Anspruch 20, wobei die Programmcodeinformationen auf einem Speichermedium gespeichert sind.

## Claims

1. Method of determining the mass of piece goods (3) on conveyor equipment (1), comprising the steps:
a) distributing individual items (3S) of the piece goods (3) on the conveyor equipment (1) in such a way that at least half thereof do not mutually overlap in a given direction of projection,
b) conveying the piece goods (3) on the conveyor equipment (1) along a conveying direction (FR) through a detection region (5E) of at least one camera (5),
c) generating mutually adjoining or partly overlapping images of the items (3S) in the detection region (5E) with the help of the camera (5), wherein line images covering a width of the conveyor equipment (1) are generated by the camera (5),
d) generating geometric data of the items (3S) on the basis of the images in dependence on the position of the items (3S) on the conveyor equipment (1) and
e) calculating the mass of the items (3S) arranged on the conveyor equipment (1) on the basis of the geometric data thereof in dependence on the position of the items (3S) on the conveyor equipment (1), wherein the projection area measure of the items (3S) is multiplied by the mean area mass, wherein
f) a mean area mass is determined in advance for the piece goods (3),
g) a projection area measure of a projection area (3PF) of each item (3S) of the piece goods (3) in the given projection direction is determined as a part of the geometric data in step e) and
h) triggering of the camera (5) is initiated by a signal reproducing the advance of the conveyor equipment (1).

2. Method according to claim 1, wherein for determination of the mean area mass of the piece goods (3) a predetermined mass of the piece goods (3) is distributed on the conveyor equipment (1) and conducted through the detection region (5E) of the camera (5) and the projection area measures of items (3S) of these piece goods (3) are added to a total projection area measure so that the mean area mass arises as a quotient of the predetermined mass and the total projection area measure of the piece goods (3).

3. Method according to claim 1 or 2, wherein a projection area centre-of-area (3PFS) is determined from the projection area (3PF) of each item (3S) of the piece goods (3) as a part of the geometric data in step e).

4. Method according to any one of the preceding claims, wherein the images of the piece goods (3) on the conveyor equipment (1) are joined together in step e) in a data processing installation on the basis of mutually overlapping regions.

5. Method according to any one of the preceding claims, wherein items (3S) of the piece goods with a projection area measure smaller than a predetermined minimum size is left out of consideration in step f).

6. Method according to any one of the preceding claims, wherein the items (3S) are illuminated in step d) by light sources (9) arranged above and/or below the conveyor equipment (1).

7. Method according to any one of the preceding claims, wherein the at least one camera (5) generates in step d) images from the items (3S) arranged on the conveyor equipment (1), the images showing the vertical projection area of the piece goods (3) on the conveyor equipment (1).

8. Method of determining the mass of a powder (7) on conveyor equipment (1), comprising the steps:
a) determining a layer-height / intensity relationship for the powder, whereby an association of the intensity, which is detected by a camera (5), of a light source (9) transilluminating the powder (7) gives a layer height of the powder (7),
b) distributing the powder (7) on the conveyor equipment,
c) conveying the powder (7) on the conveyor equipment (1) along a conveying direction (FR) through a detection region (5E), in which the powder (7) is transilluminated by a light source (9), of at least one camera (5),
d) generating mutually adjoining or partly overlapping images of the powder (7) in the detection region (5E) with the help of the camera (5),
e) determining a layer height (7H) of the powder (7) on the conveyor equipment (1) by means of the intensity, which is detected in the images of the camera (5), of the light source (9) on the basis of the layer-height / intensity relationship so as to determine a layer-height profile (7S) and therefrom a volume profile of the powder (7) on the conveyor equipment (1) and
f) multiplying the volume profile of the powder (7) by the density of the powder (7), wherein
g) line images covering a width of the conveyor equipment (1) are generated by the camera (5) and
h) triggering of the camera (5) is initiated by a signal reproducing the advance of the conveyor equipment (1).

9. Method according to claim 8, wherein for determining the layer-height/intensity relationship predetermined heights (7H) of the powder (7) are distributed on the conveyor equipment (1) and conducted through the detection region (5E) of the camera (5) in order to assign an intensity of the light source (9) to each layer height.

10. Method according to any one of the preceding claims, wherein the piece goods (3) or the powder (7) is or are sprinkled on the conveyor equipment (1) in a continuous material flow and a conveying speed of the conveyor equipment (1) is set in such a manner that the individual items (3S) of the piece goods (3) do not overlap or a predetermined maximum height (7H) of the powder (7) is not exceeded.

11. Method according to any one of the preceding claims, wherein the piece goods (3) or the powder (7) is or are guided through the detection region (5E) of the at least one camera (5) in step c) at a continuous speed.

12. Method according to any one of the preceding claims with rejection of faulty items (3S) of the piece goods (3) or powder constituents with the help of a rejecting device which with respect to the conveying direction (FR) is arranged in front of or behind the at least one camera (5).

13. Device (17) for determining the mass of pourable or tricklable piece goods (3) or powder (7) by a method according to any one of claims 1 to 12, with conveyor equipment (1) on which the piece goods (3) or powder (7) is or are arranged in distribution, at least one camera (5), which is directed onto the conveyor equipment (1) and which generates images of the piece goods (3) or powder (7) arranged on the conveyor equipment (1), and a data processing installation (13), which receives and evaluates the images generated by the camera (5) so as to determine the mass of the piece goods (3) or powder (7), wherein the device is so arranged that line images are generated by the camera and that triggering of the camera (5) is initiated by a signal which reproduces the advance of the conveyor equipment (1).

14. Device (19) according to claim 14, wherein the device is arranged for metered delivery of pourable or tricklable piece goods (3) or powder and is equipped to determine the position of items (3S) of the piece goods (3) or the mass distribution of the powder (7) on the conveyor equipment (1).

15. Device according to claim 13 or 14, wherein the conveyor equipment (1) is a conveyor belt or a vibratory chute.

16. Device according to claim 15, wherein the conveyor belt or vibratory chute is formed by a transparent material and a light source (9) is arranged thereunder in order to conduct light from the light source (9) through the powder (7) or to illuminate the items (3S) of the piece goods (3).

17. Device according to any one of claims 13 to 16, wherein an optical axis (5oA) of the at least one camera (5) is perpendicular to the conveying direction (FR).

18. Device according to any one of claims 13 to 17, wherein the conveying equipment (1) comprises a stripper (21) which with respect to the conveying direction (FR) is arranged after a discharge edge (1AK) of the conveyor equipment (1).

19. Device according to any one of claims 13 to 18, wherein the light source is an IR, an UV or a coloured light source.

20. Software product comprising program code data for carrying out the method according to any one of claims 1 to 12.

21. Software product according to claim 20, wherein the program code data are stored on a storage medium.

## Revendications

1. Procédé pour déterminer la masse de matière en morceaux (3) se trouvant sur un dispositif de transport (1), lequel comprend les étapes suivantes :
a) répartition de morceaux individuels (3S) de la matière en morceaux (3) sur le dispositif de transport (1) de façon qu'au moins la moitié de ceux-ci ne se recouvrent pas mutuellement dans une direction de projection définie,
b) transport de la matière en morceaux (3) sur le dispositif de transport (1) le long d'une direction de transport (FR) à travers une zone de détection (5E) d'au moins une caméra (5),
c) génération d'images se raccordant les unes aux autres ou se recouvrant partiellement des morceaux (3S) dans la zone de détection (5E) à l'aide de la caméra (5), la caméra (5) générant des images linéaires qui couvrent une largeur du dispositif de transport (1),
d) génération de données géométriques des morceaux (3S) sur la base des images en fonction de la position des morceaux (3 S) sur le dispositif de transport (1), et
e) calcul de la masse des morceaux (3S) disposés sur le dispositif de transport (1) sur la base de leurs données géométriques en fonction de la position des morceaux (3S) sur le dispositif de transport (1), la mesure de surface de projection des morceaux (3 S) étant multipliée par la masse surfacique moyenne,
f) une masse surfacique moyenne étant déterminée préalablement pour la matière en morceaux (3),
g) une mesure de surface de projection d'une surface de projection (3PF) de chaque morceau (3S) de la matière en morceaux (3) dans la direction de projection définie étant déterminée en tant que partie des données géométriques à l'étape e) et
h) la caméra (5) étant déclenchée par un signal qui reproduit l'avance du dispositif de transport (1).

2. Procédé selon la revendication 1, selon lequel, pour déterminer la masse surfacique moyenne de la matière en morceaux (3), une masse prédéterminée de la matière en morceaux (3) est répartie sur le dispositif de transport (1) et conduite à travers la zone de détection (5E) de la caméra (5), et les mesures de surface de projection de morceaux (3S) de cette matière en morceaux (3) sont additionnées en une mesure de surface de projection totale, de sorte que la masse surfacique moyenne est le résultat du quotient de la masse prédéterminée et de la mesure de surface de projection totale de la matière en morceaux (3).

3. Procédé selon la revendication 1 ou 2, selon lequel un centre de gravité de surface de projection (3PFS) de la surface de projection (3PF) de chaque morceau (3S) de la matière en morceaux (3) est déterminé en tant que partie des données géométriques à l'étape e).

4. Procédé selon l'une des revendications précédentes, selon lequel, à l'étape e), les images de la matière en morceaux (3) sur le dispositif de transport (1) sont assemblées dans un système de traitement de données à l'aide des zones de recouvrement mutuel.

5. Procédé selon l'une des revendications précédentes, selon lequel les morceaux (3S) de la matière en morceaux (3) ayant une mesure de surface de projection inférieure à une valeur minimale prédéfinie ne sont pas pris en compte à l'étape f).

6. Procédé selon l'une des revendications précédentes, selon lequel, à l'étape d), les morceaux (3S) sont éclairés par des sources de lumière (9) disposées au-dessus et/ou au-dessous du dispositif de transport (1).

7. Procédé selon l'une des revendications précédentes, selon lequel, à l'étape d), ladite au moins une caméra (5) génère des images des morceaux (3S) disposés sur le dispositif de transport (1) qui montrent la surface de projection verticale de la matière en morceaux (3) sur le dispositif de transport (1).

8. Procédé pour déterminer la masse d'une poudre (7) se trouvant sur un dispositif de transport (1), lequel comprend les étapes suivantes :
a) détermination d'une relation intensité/hauteur de couche pour la poudre, ce dont il résulte une correspondance entre l'intensité détectée par une caméra (5) d'une source de lumière (9) qui éclaire la poudre (7) par transparence et une hauteur de couche de la poudre (7),
b) répartition de la poudre (7) sur le dispositif de transport (1),
c) transport de la poudre (7) sur le dispositif de transport (1) le long d'une direction de transport (FR) à travers une zone de détection (5E) d'au moins une caméra (5), la poudre (7) étant éclairée par transparence par une source de lumière (9),
d) génération d'images se raccordant les unes aux autres ou se recouvrant partiellement de la poudre (7) dans la zone de détection (5E) à l'aide de la caméra (5),
e) détermination d'une hauteur de couche (7H) de la poudre (7) sur le dispositif de transport (1) au moyen de l'intensité de la source de lumière (9) détectée dans les images de la caméra (5) à l'aide de la relation intensité/hauteur de couche, pour déterminer un profil de hauteur de couche (7S) et à partir de celui-ci un profil de volume de la poudre (7) sur le dispositif de transport (1), et
f) multiplication du profil de volume de la poudre (7) par la densité de la poudre (7),
g) la caméra (5) générant des images linéaires qui couvrent une largeur du dispositif de transport (1) et
h) la caméra (5) étant déclenchée par un signal qui reproduit l'avance du dispositif de transport (1).

9. Procédé selon la revendication 8, selon lequel, pour déterminer la relation intensité/hauteur de couche, des hauteurs prédéterminées (7H) de la poudre (7) sont réparties sur le dispositif de transport (1) et conduites à travers la zone de détection (5E) de la caméra (5) pour faire correspondre à chaque hauteur de couche une intensité de la source de lumière (9).

10. Procédé selon l'une des revendications précédentes, selon lequel la matière en morceaux (3) ou la poudre (7) est répandue sur le dispositif de transport (1) en un flux de matière continu, et une vitesse de transport du dispositif de transport (1) est réglée de façon que les morceaux individuels (3 S) de la matière en morceaux (3) ne se recouvrent pas ou qu'une hauteur maximale prédéterminée (7H) de la poudre (7) ne soit pas dépassée.

11. Procédé selon l'une des revendications précédentes, selon lequel, à l'étape c), la matière en morceaux (3) ou la poudre (7) est conduite avec une vitesse continue à travers la zone de détection (5E) de ladite au moins une caméra (5).

12. Procédé selon l'une des revendications précédentes, comprenant une élimination des morceaux (3S) défectueux de la matière en morceaux (3) ou des fractions de poudre défectueuses à l'aide d'un dispositif de tri qui est disposé avant ou après ladite au moins une caméra (5) dans la direction de transport (FR).

13. Dispositif (17) pour déterminer la masse d'une matière en morceaux (3) ou d'une poudre (7) déversable ou coulante au moyen d'un procédé selon l'une des revendications 1 à 12 avec un dispositif de transport (1) sur lequel la matière en morceaux (3) ou la poudre (7) est répartie, au moins une caméra (5) qui est dirigée vers le dispositif de transport (1) et qui génère des images de la matière en morceaux (3) ou de la poudre (7) disposée sur le dispositif de transport (1), ainsi qu'un système de traitement de données (13) qui reçoit et évalue les images générées par la caméra (5) pour déterminer la masse de la matière en morceaux (3) ou de la poudre (7), le dispositif étant conçu de façon que la caméra génère des images linéaires et que la caméra (5) soit déclenchée par un signal qui reproduit l'avance du dispositif de transport (1).

14. Dispositif (19) selon la revendication 13, lequel dispositif est conçu pour la distribution dosée d'une matière en morceaux (3) ou d'une poudre (7) déversable ou coulante et conçu pour déterminer la position de morceaux (3S) de la matière en morceaux (3) ou la répartition de masse de la poudre (7) sur le dispositif de transport (1).

15. Dispositif selon la revendication 13 ou 14, dans lequel le dispositif de transport (1) est une bande transporteuse ou une goulotte vibrante.

16. Dispositif selon la revendication 15, dans lequel la bande transporteuse ou la goulotte vibrante est formée par un matériau transparent et une source de lumière (9) est disposée au-dessous pour transmettre de la lumière de la source de lumière (9) à travers la poudre (7) ou éclairer les morceaux (3S) de la matière en morceaux (3).

17. Dispositif selon l'une des revendications 13 à 16, dans lequel un axe optique (5oA) de ladite au moins une caméra (5) est perpendiculaire à la direction de transport (FR).

18. Dispositif selon l'une des revendications 13 à 17, dans lequel le dispositif de transport (1) comprend un racloir (21) qui est disposé après un bord de déversement (1AK) du dispositif de transport (1) dans la direction de transport (FR).

19. Dispositif selon l'une des revendications 13 à 18, dans lequel la source de lumière est une source de lumière IR, UV ou de couleur.

20. Produit logiciel comprenant des informations de code de programme pour exécuter le procédé selon l'une des revendications 1 à 12.

21. Produit logiciel selon la revendication 20, les informations de code de programme étant stockées sur un support de stockage.
